# EUROPEAN PATENT SPECIFICATION

(11) **EP 2 846 550 B1**
(45) Date of publication and mention of the grant of the patent: **03.10.2018**
(21) Application number: 14189621.7
(22) Date of filing: 27.12.2011
(51) Int. Cl.: H04N 19/107, H04N 19/167, H04N 19/172, H04N 19/115, H04N 19/186, H04N 19/30, H04N 19/17

(54) **Video coding and decoding devices and methods preserving PPG relevant information**
Videocodierung und -Decodierungsvorrichtungen sowie Verfahren zur Bewahrung von PPG-relevanten Informationen
Dispositifs de codage et de décodage vidéo et procédés de conservation d'informations pertinentes de PPG

(30) Priority: 05.01.2011 EP 11150146
(43) Date of publication of application: 11.03.2015
(62) Divisional of application: 11813439.4
(73) Proprietor: Koninklijke Philips N.V., 5656 AE Eindhoven (NL)
(72) Inventor: Kirenko, Ihor Olehovych, 5600 AE Eindhoven (NL); De Haan, Gerard, 5600 AE Eindhoven (NL); Van Leest, Adriaan Johan, 5600 AE Eindhoven (NL)
(74) Representative: Coops, Peter

(56) References cited:
- EP-A1- 1 739 970
- US-A1- 2005 200 757
- US-A1- 2010 119 156
- WIM VERKRUYSSE ET AL: "Remote plethysmographic imaging using ambient light", OPTICS EXPRESS, vol. 16, no. 26, 22 December 2008 (2008-12-22), page 21434, XP055065281, ISSN: 1094-4087, DOI: 10.1364/OE.16.021434

## Description

### FIELD OF THE INVENTION

The present invention relates to a video encoding device and a corresponding video encoding method for encoding video data, by which PPG (photo plethysmographic imaging) relevant information is preserved.

Further, the present invention relates to a video decoding device and a corresponding video decoding method for decoding encoded video data.

Still further, the present invention relates to a video coding system for encoding and decoding video data and to a computer program for implementing said methods.

### BACKGROUND OF THE INVENTION

There is an increasing demand to provide technological solutions for a robust continuous monitoring of biometrical signals of people. This demand is a result of growing awareness of the importance of a healthy and active lifestyle among the younger generations. Moreover, the constantly ageing population as a result of increased life expectancy puts extra pressure on the necessity of health monitoring systems with minimal interference to a person's daily life activity. Unobtrusive monitoring of biometrical signals could be used to provide a virtually immediate feedback on the body and mind condition at any time, and evaluate changes in the health status of people as soon as possible.

Conventional devices and methods of measuring biometrical signals (e.g. heart rate, respiratory rate, blood pressure, skin oxygenation, etc) require the user to wear annoying body sensors, which might be experienced as obtrusive to a normal human life activity. Therefore, attempts are seen in recent years to develop contactless techniques for remote monitoring of vital body signals. The latest developments show the implementation of unobtrusive remote monitoring by means of imaging sensors as designed for consumer (webcam) or broadcast video.

A method to measure skin color variations, called Photo-Plethysmographic imaging (PPG), is described in Wim Verkruysse, Lars O. Svaasand, and J. Stuart Nelson, "Remote plethysmographic imaging using ambient light", Optics Express, Vol. 16, No. 26, December 2008. It is based on the principle that temporal variations in blood volume in the skin lead to variations in light absorptions by the skin. Such variations can be registered by a video camera that takes images of a skin area, e.g. the face, while processing calculates the pixel average over a manually selected region (typically part of the cheek in this system). By looking at periodic variations of this average signal, the heart beat rate and respiratory rate can be extracted.

Known systems for remote measurement of heart beat or respiratory rate signals are based on analysis of uncompressed, un-processed video sequences directly after image sensing. In most "real-life" applications video sequences are stored or transmitted in a compressed form. The compression of video signals presumes a removal of some redundant (from visual perception point of view) information. Unfortunately, information, which is not important for visual perception might be crucial for detection of biometrical signals. For instance, the MPEG compression standard makes use of inter-frame predictions, which slightly changes the temporal information of a video signal. Those changes make the detection of temporal biometrical signals difficult or even impossible. However, for many applications, extraction of heart beat signal from a video should be implemented after the video recording took place. In those cases, compressed video would be processed.

The PPG relevant information can be preserved in a coded bit stream if a video is compressed at a high bit rate. However, compression of a video with a low compression ratio will increase the size of a storage file or increase the transmission bandwidth. Therefore, there is a need for preservation of the information required for off-line extraction of biometrical signals during video recording and compression, in particular according to one of the conventional video coding standards.

Standard video coding techniques (like MPEG2, MPEG4, H.264) achieve a significant compression of video information by applying a temporal prediction. Most of the frames in a video sequence (types B and P, B meaning "Bidirectionally predicted frame", P meaning "forward Predicted frame") are encoded as quantized differences between an original frame and a motion-compensated inter coded frame (type B or P). Some of the visual information is lost due to quantization and motion prediction. Although this information is insignificant from visual perception point of view, it contains data crucial for extraction of biometrical signals, such as the heart beat.

PPG information can be preserved in a video sequence, if the video is compressed at high bit-rate, without applying temporal prediction, and/or de-blocking filter (for H.264). For example, MJPEG or MJPEG2K, based on intra-frame coding only, can be applied to compress a video and preserve PPG signal. However, intra-coding of whole frames cannot provide a compression ratio, required by most of multimedia applications. Hence, there is particularly a need for a method and a device allowing compression of video using standard lossy video compression techniques and preserve image information required for extraction of PPG signal after decoding of a video.

### SUMMARY OF THE INVENTION

It is an object of the present invention to provide a video encoding device and a corresponding video encoding method for encoding video data, by which PPG relevant information is preserved without requiring a large amount of additional data. It is a further object of the present invention to provide a corresponding video decoding device and method, a video coding system and a computer program for implementing said methods.

In a first aspect of the present invention a video encoding device is presented for encoding input video data, the video encoding device comprising:
- a selection unit for selecting in input video data one or more regions of interest that can be used to provide a strong PPG signal,
- a first encoding unit for encoding said one or more regions of interest of said input video data (102) according to a predetermined encoding scheme with a first setting of the encoding to preserve PPG-relevant information in the encoded one or more regions of interest,
- a second encoding unit for encoding remaining parts of said input video data according to said predetermined encoding scheme with a second setting of the encoding, and
- an encoder combination unit for combining the encoded one or more regions of interest and the encoded remaining parts of said input video data into an encoder output video stream where first encoding unit is adapted for encoding only the chrominance components (101a) of said one or more regions of interest.

In a further aspect of the present invention a video decoding device is presented for decoding an encoded video stream, said encoded video stream comprising encoded video data, wherein one or more regions of interest of input video data have been encoded according to a predetermined encoding scheme with a first setting of the encoding to preserve PPG-relevant information in the encoded one or more regions of interest and remaining parts of said input video data have been encoded according to said predetermined encoding scheme with a second setting of the encoding, said video decoding device comprising:
- a first decoding unit for decoding the encoded one or more regions of interest according a decoding scheme complementary to the encoding scheme that has been used for encoding said one or more regions of interest,
- a PPG extraction unit for extracting a PPG signal from said decoded one or more regions of interest.

In further aspects of the present invention a corresponding video coding method and a corresponding video decoding method, a video coding system and a computer program comprising program code means for causing a computer to carry out the steps of the proposed method when said computer program is carried out on the computer are presented.

Preferred embodiments of the invention are defined in the dependent claims. It shall be understood that the claimed video decoding device, video coding system, methods and computer program have similar and/or identical preferred embodiments as the claimed video coding device and as defined in the dependent claims.

The present invention is based on the idea, for the preservation of PPG-relevant information in the encoded video signal, to encode one or more regions of interest containing one or more areas with PPG-relevant information which allows to derive a strong PPG signal, in particular the strongest PPG signal, differently (i.e. with substantially no losses with respect to the PPG-relevant information) than the other areas of the video data from which no PPG signal shall (or even can) be extracted. In particular, local coding parameters (in general, a particular setting of the encoder) are set for encoding the one or more regions of interest, and a bit-budget may be allocated to one or more spatial image areas (i.e. the one or more regions of interest) useful for extraction of a PPG signal, while providing the optimal trade-off between the encoding (e.g. a compression ratio) and the quality of the PPG signal extracted from a (at least partly) decoded signal.

Biometrical signals can be detected using Photo-Plethysmography (PPG) principles from video sequences, which are for instance either streamed from a video camera or recorded uncompressed. As mentioned above, in practical applications such observation is not always supported. The present invention achieves to preserve PPG visual information for the extraction of PPG signals / biometrical signals during a video compression, e.g. by a standard video coder, while allowing compression at a low bit rate. Preferably, the invention allows the generation of a standard compliant coded bit stream, e.g. for storage on a data carrier or transmission over a transmission line, e.g. the internet or through a mobile communications system.

In this context the expression "PPG-relevant information" is to be understood as information that is relevant for obtaining a PGG signal. Such PPG-relevant information may include information contained in original video data that is not recognized for the human eye, for instance slight color changes of the skin of a person. The expression "PPG signal" in this context generally means any signal that can be obtained through PhotoPlethysmoGraphy analysis, such as temporal biometrical signals, e.g. the heartbeat, cardiac cycle, SpO2, respiratory rate, depth of anesthesia or hypo- and hypervolemia.

In a preferred embodiment the encoding device further comprises an area selection unit for selecting an area, in particular a skin area, in the input video data as region of interest, wherein said video data comprises a sequence of video frames, said frames being divided into spatial blocks, and a block selection unit for determining the spatial blocks for said selected area, which determined spatial blocks represent the region of interest. Generally, the video data are available as a sequence of video frames, and each frame is divided into spatial blocks (e.g. of the size comprising 4x4 or 16x16 pixels). Hence, for subsequent encoding according to this embodiment the optimal spatial blocks are found which shall be encoded with the first encoding unit.

According to a further embodiment said area selection unit comprises a detection unit for detecting a set of potentially usable areas, in particular skin areas, in the input video data that could be used as region of interest, and an analysis unit for analyzing said set of detected potentially usable areas and selecting an area as region of interest based on one or more predetermined selection criteria. Such an analysis unit may, for instance, comprise a face and/or a skin detector for detecting face and/or skin regions in the video data, in particular in one or more video frames. Thus, preferably face or skin areas are potentially usable. Preferably, the most (temporally) stable face and/or skin region is selected as region of interest. But other selection criteria may also be used, such as the spatial size, illumination stability and/or color stability. Such a detector is, for instance, described in Paul Viola, Michael Jones, "Robust Real-time Object Detection", 2nd Intern. Workshop on Statistical and Computational Theories of Vision, Vancouver, Canada, 2001.

In another embodiment said analysis unit comprises a PPG extraction unit for extracting a PPG signal from said detected potentially usable areas and for selecting one or more areas as regions of interest based on the quality and/or content of the extracted PPG signals. Thus, the analysis unit can better foresee which of the potentially usable areas will provide a strong PPG signal and will thus make the selection of the one or more regions of interest accordingly.

Preferably, said PPG extraction unit is adapted for determining one or more parameters of the first settings for the encoding for use by the first encoding unit for encoding said one or more regions of interest based on the extracted PPG signals and said first encoding unit is adapted for using said one or more parameters of the first setting for the encoding of said one or more regions of interest. Thus, the result of the PPG extraction will be used to control the encoding process of the selected one or more regions of interest to use the optimal encoder setting to achieve that the best possible PPG signal can be extracted from the encoded one or more regions of interest in the decoder. Those parameters of the first settings for the encoding unit may include one or more of a compression rate, intra- or inter-coding mode of a block/field/frame,, number of AC coefficients used, quantizer scale, intra DC precision, customized quantizer matrix, etc.

In an embodiment said first encoding unit is adapted for encoding at least the chrominance components, in particular only the chrominance components, of said one or more regions of interest and said second encoding unit is adapted for encoding the luminance components of said one or more regions of interest and for encoding the chrominance components and the luminance components of the remaining parts of said input video data. This contributes to a reduction of the amount of data for the encoded one or more regions of interest video data.

According to another embodiment said first encoding unit is adapted for encoding said one or more regions of interest by intra-block coding and said second encoding unit is adapted for encoding remaining parts of said input video data by inter- and/or intra-block coding. This provides that the one or more regions of interest are encoded substantially without losses. Intra-block coding and inter-block coding are generally known techniques and are often, e.g. in MPEG encoders, used for encoding. Hence, no further details shall be explained here since these details are known to the skilled person.

Still further, in an embodiment said first encoding unit is adapted for encoding only DC components of inter- or intra-blocks of at least the chrominance components, in particular only the chrominance components, of said one or more regions of interest. This further contributes to a reduction of the amount data for the encoded one or more regions of interest, in particular if only DC components of inter- or intra-blocks of the chrominance components are encoded. The PPG relevant information is generally carried by all pixels, but there is generally not much interest in the spatial information. Instead, only as many pixels are needed to take an average in order to improve the signal-to-noise-ratio of the desired PPG signal, e.g. heartbeat, in the individual pixels. The PPG relevant information / the PPG signal is usually smaller even than the quantization steps of an uncompressed 8 bit video signal. This average can be based on the DC component, and there is no absolute need to know the individual pixel values, although it could help in blocks that contain skin and some other image parts (e.g. at the boundary of a face).

Still further, in an embodiment the selection unit is adapted for selecting two or more regions of interest in the input video data providing strong PPG signals, in particular the strongest PPG signals, and the first encoding unit is adapted for encoding the selected regions of interest. Thus, not only a single region of interest but several regions of interest are available for evaluation and retrieval of PPG signals during decoding which increases the reliability. For instance, in an embodiment PPG signals may be retrieved from each of said regions of interest and thereafter an evaluation which of the PPG signal has the highest reliability or an averaging of all PPG signals may be carried out.

In an embodiment a ROI information may be generated, in particular by the selection unit, which ROI information comprises an information about the location of the region(s) of interest and which may be included into the encoder output video data. The decoding device may then use this ROI information to easily find the region(s) of interest for decoding and extracting the PPG signal there from.

During decoding, the video decoding device is at least able to decode the encoded region of interest from the decoder input video data and to extract a PPG signal from the decoded region of interest. The PPG extraction uses, for this purpose, generally known methods as, for instance, described in the above-mentioned paper about PPG or as described in other citations describing the basics of PPG. In further embodiment, however, the decoding unit may also be adapted to decode the complete video data, in particular according to a decoding scheme complementary to the encoding scheme used during encoding. The encoding performed in the video encoding device must thus be adapted to ensure this.

### BRIEF DESCRIPTION OF THE DRAWINGS

These and other aspects of the invention will be apparent from and elucidated with reference to the embodiment(s) described hereinafter. In the following drawings
Fig. 1 shows a schematic block diagram of a first embodiment of a video encoding device according to the present invention,
Fig. 2 shows a schematic block diagram of a first embodiment of a video decoding device according to the present invention,
Fig. 3 shows a schematic block diagram of a second embodiment of a video encoding device according to the present invention,
Fig. 4 shows a schematic block diagram of a third embodiment of a video encoding device according to the present invention,
Fig. 5 shows a schematic block diagram of a second embodiment of a video decoding device according to the present invention,
Fig. 6 shows a schematic block diagram of a third embodiment of a video decoding device according to the present invention, and
Fig. 7 shows a schematic block diagram of a fourth embodiment of a video encoding device according to the present invention.

### DETAILED DESCRIPTION OF THE INVENTION

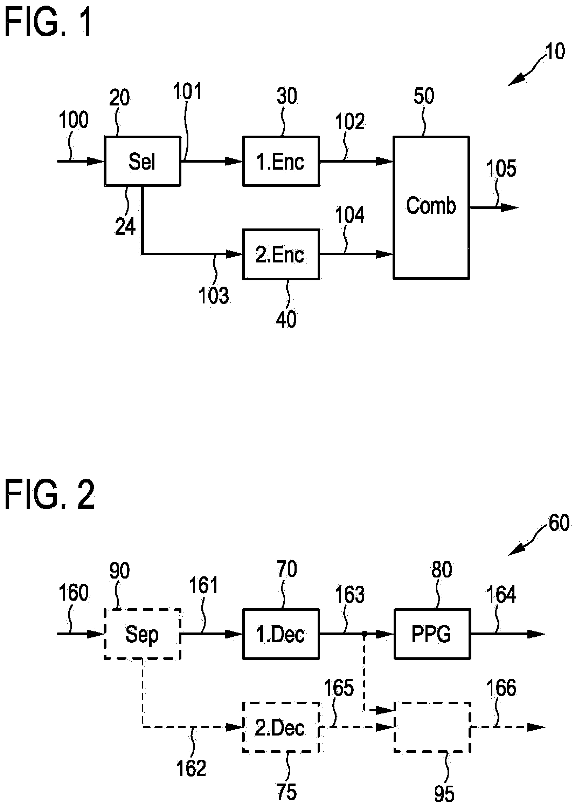

Fig. 1 shows a schematic block diagram of a first general embodiment of a video encoding device 10 according to the present invention. According to this embodiment an original video stream 100, also called input video data, is provided to a selection unit 20 which selects a region of interest 101 in the input video data 100 providing a strong PPG signal. The selected region of interest 101 is provided to a first encoding unit 30 for encoding said selected region of interest 101 according to a predetermined encoding scheme with a first setting of the encoding to preserve PPG-relevant information in the encoded region of interest 102. In parallel the remaining parts 103 of said input video data 100 are encoded by a second encoding unit 40 according to said predetermined encoding scheme with a second setting of the encoding. In an encoder combination unit 50 the encoded region of interest 102 and the encoded remaining parts 104 of said input video data 100 are encoded into an encoder output video stream 105.

By using said first setting for the encoding of the selected region of interest 101 it is substantially ensured that the selected region of interest 101 is encoded substantially without losses, at least with respect to the PPG-relevant information included in the selected region of interest 101 so that a strong PPG signal can be extracted from the selected region of interest 101 in the decoding device. The remaining parts 103 of the input video data 100 are encoded separately with a second setting of the encoding, for instance at a low bit rate (or at least a bit rate which may be optimal for perception but not sufficient for PPG-extraction).

Fig. 2 shows a schematic block diagram of a first general embodiment of a video decoding device 60 according to the present invention. According to this embodiment a received encoded video stream 160 is decoded. Said encoded video stream 160 which - apart from disturbances introduced during storage and/or transmission - should correspond to the encoder output video stream 105 and comprises the encoded video data including the encoded region of interest 161 and the encoded remaining parts 162 of the input video data 100.

The video decoding device 60 comprises a first decoding unit 70 for decoding the encoded region of interest 161 according a decoding scheme complementary to the encoding scheme that has been used for encoding said region of interest 101 in the video encoding device 10 and a PPG extraction unit 80 for extracting a PPG signal 164 from said decoded region of interest 163. To define such a region of interest, the coordinates of the region of interest are preferably obtained from a corresponding ROI information, e.g. by reading a ROI information included in the video decoder input stream 160 or by image analysis (e.g. by a check of the quantization level by which the encoded region of interest can be distinguished from the encoded remaining regions).

Optionally, a separation unit 90 may be provided for separating the encoded region of interest 161 and the encoded remaining parts 162 or at least for retrieving the encoded region of interest 161 from the decoder input video data 160. Further, optionally a second decoding unit 75 may be provided for decoding the encoded remaining parts 162 of said input video data according said decoding scheme and a decoder combination unit 95 may then be provided for combining the decoded region of interest 163 and the decoded remaining parts 165 into a decoder output video stream 166.

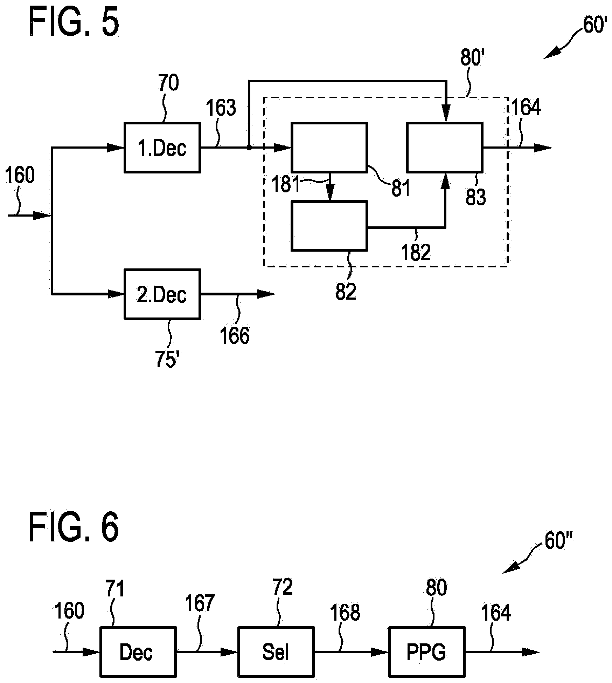

Fig. 6 shows a schematic block diagram of a second, more simple embodiment of a video decoding device 60" according to the present invention. According to this embodiment the input video stream 160 is not split as in the embodiment shown in Fig. 2. First, in a common decoding unit 71 the input video stream 160 is decoded. Then, in the decoded video stream 167 the region of interest 168 is selected in a selection unit 72, from which a PPG signal 164 is extracted by the PPG extraction unit 80.

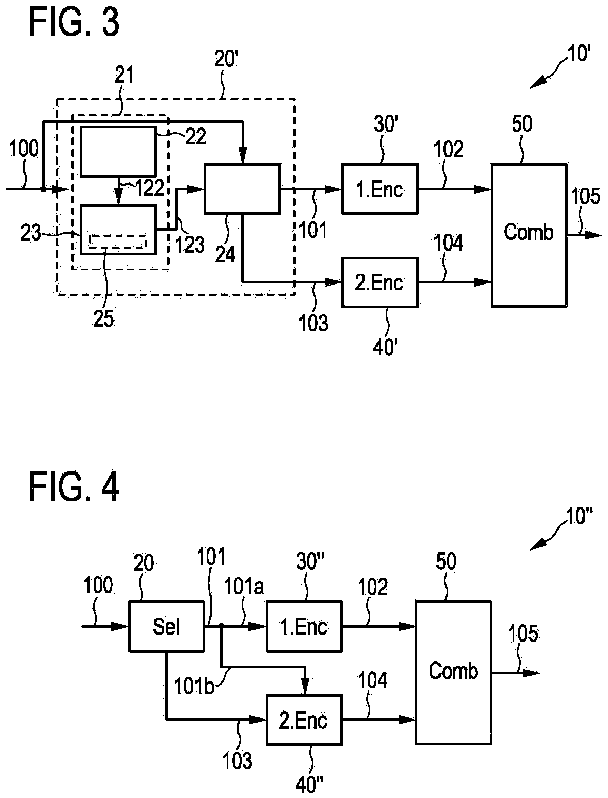

Fig. 3 shows a schematic block diagram of a second more detailed embodiment of a video encoding device 10' according to the present invention, which comprises a preferred embodiment of the selection unit 20'. In particular, the selection unit 20' comprises an area selection unit 21 for selecting an area 123, in particular a skin area, in the input video data 100 as region of interest, wherein said video data comprises a sequence of video frames, said frames being divided into spatial blocks. Further, the selection unit 20' comprises a block selection unit 24 for determining the spatial blocks 101 for said selected area 123, which determined spatial blocks 101 represent the region of interest.

In a further refinement, as shown in Fig. 3, the area selection unit 21 comprises a detection unit 22 for detecting a set 122 of potentially usable areas, in particular skin areas, in the input video data 100 that could be used as region of interest, and an analysis unit 23 for analyzing said set 122 of detected potentially usable areas and selecting an area 123 as region of interest based on one or more predetermined selection criteria. From said selected region of interest the corresponding spatial blocks 101 are then determined in the block selection unit 24, which are subsequently encoded by the first encoding unit 30' as described above.

The detection of potentially usable areas is preferably adapted for detecting face or skin areas, in particular by an available method for skin detection. Depending on a particular video content, the detected skin areas might occupy either small portions of a video frame, or an entire video frame. In the second case, an encoding of the entire detected skin area, e.g. using intra-block coding, will cause a significant reduction in the compression efficiency.

Moreover, generally not the entire skin area could be useful for the extraction of a PPG signal. For example, only a small part of a skin area is temporally stable over a certain period of time. Therefore, only this part of a skin area should be used for PPG signal extraction. Hence, the analysis unit 23 analyses all the skin areas detected in video frames by the detection unit 22 and selects only the part(s), which is (are) optimal based one or more of several criteria, including spatial size, temporal stability, illumination stability and/or color stability.

Thus, the analysis unit 23 preferably searches for the most stable face and/or skin region since such stable regions are generally supposed to provide the strongest PPG signals. The unit 23 can select a smallest region of interest, which would be able to provide a PPG signal. The expected strength of a PPG signal can be analyzed either by analyzing a spatial pixel uniformity inside region of interest or by detecting a preferred face areas (e.g. forehead, cheeks). The output of analysis unit 23 is an information about the location of the region of interest, e.g. in the form of a ROI information, which is provided to the block selection unit 24 for selecting the spatial blocks in the input video data 100 belonging to the selected region of interest.

This is particularly required if the video frames of the input video data 100 are divided into spatial blocks (having a size from e.g. 4x4 to 16x16 pixels depending on the respective compression scheme). Coordinates 123 of the optimal skin area are then provided by the analysis unit 23 to the block selection unit 124, which selects blocks 101 with the optimal skin areas, i.e. the blocks representing the selected region(s) of interest. In case several regions of interest are used this provides the option during PPG signal extraction to improve the ability to select the best PPG signal or for averaging PPG signals obtained from different regions.

The compression of the selected skin areas is done in a way which will guarantee a preservation of PPG-relevant information after encoding and (later) after decoding/decompression. The PPG signal 165 (see Fig. 2) is extracted mostly from chrominance channels of a video stream. Therefore, in order to preserve PPG-relevant information those blocks 101 will be encoded by the first encoding unit 30' as intra-blocks in an embodiment. The other frame blocks 103, i.e. the blocks of the remaining parts are encoded in the second encoding unit 40', e.g. by a standard coder either as inter-blocks or as intra-blocks, depending on settings and type of the second encoding unit 40'. Video coding standards allow selection of intra- or inter-coding mode on a block basis. Therefore, the proposed algorithm will allow the creation of a standard-compliant coded bit-stream 105 with preserved PPG-relevant information.

The analysis unit 23 and the block selection unit 24 will find the optimal trade-off between the size of a skin area required for the reliable PPG signal extraction and a loss of a compression ratio due to allocation of a large bit-budget for intra-coding of skin areas. In another embodiment, the analysis unit 23 might (not mandatory) comprise a PPG signal extraction 25 and possibly a PPG signal metric to guide the selection of skin areas.

To extract a PPG signal temporal chrominance information is generally required without errors, which can be achieved by encoding chrominance blocks with higher bit-rate, as is provided in still another embodiment. In particular, in still another embodiment of the video encoding device 10" as shown in Fig. 4 the first encoding unit 30" is adapted for encoding at least (preferably only) the chrominance components 101a of said selected region of interest 101, while the second encoding unit 40" is adapted for encoding the luminance components 101b of said selected region of interest 101 and for encoding the chrominance components and the luminance components of the remaining parts 103 of said input video data 100.

In principle, inter-block encoding can be used for chrominance coding of the selected blocks, as long as DC components are compressed without loss of information (lossless), and quantization of AC components introduce artifacts. Luminance blocks can be encoded with loss of information, because their contribution to the PPG extraction process is less significant than the contribution of chrominance components.

According to still another embodiment either only the chrominance components of the selected region of interest are encoded as intra-blocks, or both the chrominance and luminance components associated the selected region of interest are encoded as intra-blocks. In this embodiment, in case a selected skin area (i.e. the region of interest) is not moving, extra bits would be unnecessary spent on encoding of blocks as intra-blocks. However, if a selected skin area is moving, artifacts will not be introduced so that this embodiment will be more efficient.

The proposed decoding process allows not only the reconstruction of a video stream, e.g. according to a video coding standard, but also the extraction of a PPG signal from a partly decoded video stream, in particular from the decoded region of interest.

Fig. 5 shows a second more detailed embodiment of a video decoding device 60' according to the present invention, which substantially corresponds to the complementary video encoding device 10' shown in Fig. 3. In this embodiment the decoder input video data 160 are both provided to the first decoding unit 70 and the second decoding unit 75'. While the first decoding unit 70 is substantially identical to the first decoding unit 70 explained above and outputs the decoded region of interest 163, the second decoding unit 75' does not only decode remaining areas but decodes the complete decoder input video data 160 and output the complete decoder output video data 166, i.e. all video data are (e.g. conventionally) decoded therein.

Thus, first the standard procedure to decode the input bit stream is applied up to the level of encoded blocks extraction. After that, either the entire bit stream and/or the intra-coded blocks are further decoded. Those intra-coded blocks correspond to optimal skin areas selected at the encoder side.

To obtain the PPG signal 164 the PPG signal extraction unit 80' comprises a block extraction unit 81 for extracting from the decoded region of interest 163 the blocks of the region of interest which have been encoded by the first encoding unit 30' of the video encoding device 10'.

Subsequently, by use of a block information 181 provided by the block extraction unit a reconstruction unit 82 reconstructs the region of interest, e.g. one or more skin areas, from the decoded intra-blocks of the region of interest. For instance, if in the first decoding unit 70 at least (preferably only) the chrominance components of the region of interest are decoded, the chrominance components of the region of interest are reconstructed in the reconstruction unit 82.

Subsequently, in a PPG signal extraction unit 83 the PPG signal extraction algorithm is applied to the reconstructed region of interest 182, e.g. to the chrominance components only if only chrominance components are encoded without loss of PPG-relevant information, to finally obtain the desired PPG signal 164.

In another embodiment of the video decoding device the PPG signal 164 can be extracted from either chrominance, luminance or both channels, if both the chrominance and luminance components have been encoded, e.g. as intra-blocks, by the video encoding device. Thus, the selection of the optimal embodiment of video encoding device and the video decoding device can be done based on the approach used for the reconstruction of the PPG signal.

As mentioned, the PPG signal extraction unit 83 detects and extracts the PPG signal 164 from the reconstructed region of interest, e.g. the reconstructed skin area. In principle, only the reconstructed region of interest is used for the extraction of the PPG signal. Therefore, it is not mandatory to decode a video sequence at a full original resolution, but generally only decoding of the region of interest (e.g. of the intra-blocks) is sufficient to obtain the PPG signal. Thus a computational power otherwise required by motion compensation and reconstruction of all inter-blocks can be saved if only the extraction of the PPG signal is desired but no fully decoded video data.

The particular method and the parameters used for the extraction of the PPG signal can be defined and modified during the decoding and extraction of the PPG signal. In other words, the proposed video encoding device does neither limit the choice of a PPG signal extraction method, nor the choice of the monitored subject. Being once encoded, a video sequence can be processed by different PPG extraction methods during or after decoding, and different vital signs can be extracted (e.g. heart rate, heart rate variability, SpO2, respiration, PPG imaging, etc). The proposed PPG-friendly video decoding device can be upgraded by new PPG extraction algorithms, which would allow better extraction of PPG signals from already encoded video sequences.

The same encoded video sequence can be decoded also by a standard video decoding device, without embedded algorithms for extraction of PPG signals, thus preserving backward compatibility with existing video decoding devices.

In case a standard codec used in the proposed scheme contains an in-loop deblocking filter to reduce coding artifacts, such de-blocking filter should be switched off for at least the chrominance components of blocks associated with the selected region of interest. Otherwise, the in-loop de-blocking filter might suppress a visual information that is essential for the extraction of PPG signals.

The PPG extraction algorithm can be either real-time or non real-time with manual tuning of parameters. Moreover, the present invention generally allows selection of any particular method of biometrical signal extraction after the video data have been recorded, depending on the particular application. Thus, the same video can be used for extraction of different biometrical signals (e.g. heart rate, heart rate variability, SpO2, respiration, PPG imaging).

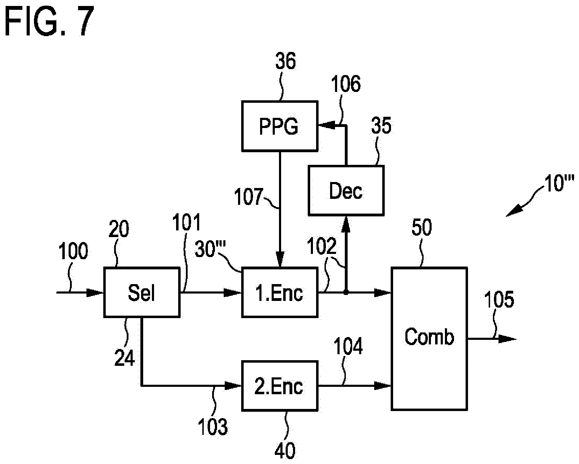

Still another embodiment of a video encoding device 10'" according to the present invention is schematically depicted in Fig. 7. This embodiment is quite similar to the embodiment of the video encoding device 10 shown in Fig. 1, but in addition a decoding unit 35 and a PPG signal extraction unit 36 are provided in a feedback loop formed with the first encoding unit 30"'. This feedback loop controls the number of bits allocated to the selected region of interest 101, i.e. controls the setting of the encoding used for encoding said selected region of interest 101 to make sure that the PPG-relevant information is preserved in the encoded region of interest 102.

Thus, the decoding unit 35 decodes the encoded region of interest 102 (applying a decoding scheme that is complementary to the first encoding scheme applied by the first encoding unit 30'") and the PPG signal extraction unit 36 extracts a PPG signal 107 from the decoded region of interest 106. The first encoding unit 30'" can then decide if the PPG signal has sufficient quality or if the setting used for encoding needs to be changed (e.g. if more bits need to be assigned for the encoded region of interest, and/or if the compression rate needs to be lowered) to increase the quality of the extracted PPG signal. Thus, it can be ensured that in a decoding device a PPG signal can be extracted with sufficient quality.

Thus, the present invention modifies the known concept of SNR or quality scalability during video compression for the purpose of enabling vital signs extraction. The present invention can be used for video streaming as well as for storage of compressed video material. Normally, only bit stream comprising the encoded video data will be transferred or decompressed to obtain a video data at a basic quality in which all video data are identically encoded, i.e. with a single encoding scheme and identical encoding parameter settings. According to the present invention additional data are included in the encoded bit stream preserving PPG essential information, which will be transferred or decompressed only if biometrical signals should be extracted. In this way, the optimal trade-off between a compression efficiency and preservation of biometrical information in the compressed video can be achieved.

In summary, the proposed invention allows extraction of the PPG signal after video (de-)compression. The complexity and accuracy of PPG extraction algorithms can be selected based on the concrete application. For instance, some applications may require extraction of only heart rate information, while others may require beat-to-beat precise heartbeat signal, or/and respiration, or/and SpO2 (oxygenation). Moreover, the present invention allows an off-line (non-real-time) extraction of PPG signals from a compressed video, with the possibility to manually select and tune optimal parameters.

Generally, the invention is not restricted to particular encoding / decoding schemes. Generally, the first encoding used for encoding one or more selected regions of interest is less lossy than the second encoding used for encoding the remaining data. In particular embodiments the PPG-relevant visual information is encoded using intra-block and/or inter-block coding while other visual information, which is non-essential for biometrical signal extraction, is encoded using inter-frame coding. Thus, a fast and low-cost extraction of PPG information during video decoding from intra-frame encoded blocks is achieved without a need to decode complete video frames.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored / distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. Video encoding device (10, 10', 10", 10"') for encoding input video data, the video encoding device comprising:
- a selection unit (20, 20') for selecting in the input video data one or more skin areas as regions of interest (101), that can be used to provide a strong PPG signal,
- a first encoding unit (30,30', 30", 30"') for encoding said one or more regions of interest (101) of said input video data (100) according to a predetermined encoding scheme with a first setting of the encoding to preserve PPG-relevant information in the encoded one or more regions of interest,
- a second encoding unit (40, 40', 40") for encoding remaining parts (103) of said input video data (100) according to said predetermined encoding scheme with a second setting of the encoding, and
- an encoder combination unit (50) for combining the encoded one or more regions of interest (102) and the encoded remaining parts (104) of said input video data into an encoder output video stream (105),
**characterised in that** said first encoding unit (30) is adapted for encoding only the chrominance components (101a) of said one or more regions of interest (101).

2. Video encoding device (10') as claimed in claim 1,
wherein said selection unit (20') comprises
- an area selection unit (21) for selecting one or more skin areas in the input video data (100) as one or more regions of interest, wherein said video data comprises a sequence of video frames, said frames being divided into spatial blocks, and
- a block selection unit (24) for determining the spatial blocks (123) for said selected one or more areas, which determined spatial blocks represent the one or more regions of interest.

3. Video encoding device (10') as claimed in claim 2,
wherein said area selection unit (21) comprises
- a detection unit (22) for detecting a set of potentially usable areas (122), in particular skin areas, in the input video data that could be used as region of interest, and
- an analysis unit (23) for analyzing said set of detected potentially usable areas (122) and selecting one or more areas (123) as one or more regions of interest based on said one or more predetermined selection criteria.

4. Video encoding device (10') as claimed in claim 3, wherein said analysis unit (23) is adapted for using as selection criteria, one or more of spatial size, temporal stability, illumination stability and color stability.

5. Video encoding device (10') as claimed in claim 3,
wherein said analysis unit (23) comprises a PPG extraction unit (25) for extracting a PPG signal (180) from said detected potentially usable areas and for selecting one or more areas (123) as one or more regions of interest based on the quality and/or content of the extracted PPG signals.

6. Video encoding device (10') as claimed in claim 3,
wherein said PPG extraction unit (25) is adapted for determining one or more parameters of the first settings for the encoding for use by the first encoding unit (30, 30') for encoding said one or more regions of interest based on the extracted PPG signals, and
wherein said first encoding unit (30, 30') is adapted for using said one or more parameters of the first setting for the encoding of said one or more regions of interest.

7. Video encoding device (10") as claimed in claim 1,
wherein said second encoding unit (40) is adapted for encoding the luminance components (101b) of said one or more regions of interest (101) and for encoding the chrominance components and the luminance components of the remaining parts (103) of said input video data (100).

8. Video encoding device (10, 10', 10") as claimed in claim 1,
wherein said second encoding unit (40, 40') is adapted for encoding remaining parts (103) of said input video data (100) by inter-block coding or intra-block coding.

9. Video encoding device (10") as claimed in claim 1,
wherein said first encoding unit (30) is adapted for encoding only DC components of inter- or intra-blocks of at least the chrominance components (101a), in particular only the chrominance components (101a), of said one or more regions of interest (101).

10. Video encoding method for encoding input video data, the video encoding method comprising the steps of:
- selecting in input video data (100) one or more skin areas as regions of interest (101), that can be used to provide a strong PPG signal, based on one or more predetermined selection criteria including the spatial size, temporal stability, illumination stability and color stability or based on the quality and/or content of PPG signals extracted from skin areas potentially usable as region of interest,
- encoding said one or more regions of interest (101) of said input video data (100) according to a predetermined encoding scheme with a first setting of the encoding to preserve PPG-relevant information in the encoded one or more regions of interest, wherein only the chrominance components (101a) of said one or more regions of interest (101) are encoded),
- encoding remaining parts (103) of said input video data (100) according to said predetermined encoding scheme with a second setting of the encoding, and
- combining the encoded one or more regions of interest (102) and the encoded remaining parts (104) of said input video data into an encoder output video stream (105).

11. Video decoding device (60, 60', 60") for decoding an encoded video stream, said encoded video stream (160) comprising encoded video data, wherein one or more skin areas as regions of interest (101) of input video data (100) have been selected based on one or more predetermined selection criteria including the spatial size, temporal stability, illumination stability and color stability or based on the quality and/or content of PPG signals extracted from skin areas potentially usable as region of interest, and have been encoded according to a predetermined encoding scheme with a first setting of the encoding to preserve PPG-relevant information in the encoded one or more regions of interest (102), wherein only the chrominance components (101a) of said one or more regions of interest (101) have been encoded, and remaining parts (103) of said input video data (100) have been encoded according to said predetermined encoding scheme with a second setting of the encoding, said video decoding device comprising:
- a first decoding unit (70) for decoding the encoded one or more regions of interest (161) according a decoding scheme complementary to the encoding scheme that has been used for encoding said one or more regions of interest, and
- a PPG extraction unit (80, 80') for extracting a PPG signal (164) from said one or more decoded regions of interest (163).

12. Video decoding device (60') as claimed in claim 11, further comprising
- a second decoding unit (75) for decoding the encoded remaining parts (162) of said input video data according said decoding scheme and
- a decoder combination unit (95) for combining the decoded one or more regions of interest (163) and the decoded remaining parts (165) into a decoder output video stream (166).

13. Video decoding method for decoding an encoded video stream, said encoded video stream (160) comprising encoded video data, wherein one or more skin areas as regions of interest (101) of input video data (100) have been selected based on one or more predetermined selection criteria including the spatial size, temporal stability, illumination stability and color stability or based on the quality or content of PPG signals extracted from skin areas potentially usable as region of interest, and have been encoded according to a predetermined encoding scheme with a first setting of the encoding to preserve PPG-relevant information in the encoded one or more regions of interest (102), wherein only the chrominance components (101a) of said one or more regions of interest (101) have been encoded, and remaining parts (103) of said input video data (100) have been encoded according to said predetermined encoding scheme with a second setting of the encoding, said video decoding method comprising the steps of:
- decoding the one or more encoded regions of interest (161) according a decoding scheme complementary to the encoding scheme that has been used for encoding said one or more regions of interest, and
- extracting a PPG signal (164) from said one or more decoded regions of interest (163).

14. Video coding system for encoding and decoding video data, comprising:
a video encoding device (10, 10', 10") as claimed in claim 1 for encoding input video data, and
a video decoding device (60, 60') as claimed in claim 11 for decoding encoded video data encoded by said video encoding device.

15. Computer program comprising program code means for causing a computer to carry out the steps of the method as claimed in claim 10 or 13 when said computer program is carried out on the computer.

## Patentansprüche

1. Videocodiervorrichtung (10, 10', 10", 10"') zur Codierung von Videoeingangsdaten, wobei die Videocodiervorrichtung umfasst:
- eine Auswahleinheit (20, 20'), um in den Videoeingangsdaten einen oder mehrere Hautareale als interessierende Bereiche (101) auszuwählen, die zur Bereitstellung eines starken PPG-Signals verwendet werden können,
- eine erste Codiereinheit (30, 30', 30", 30"'), um den einen oder mehrere interessierende Bereiche (101) der Videoeingangsdaten (100) gemäß einem vorgegebenen Codierschema bei einer ersten Einstellung der Codierung zur Sicherung von PPG-relevanten Informationen in dem einen oder mehreren codierten, interessierenden Bereichen zu codieren,
- eine zweite Codiereinheit (40, 40', 40"), um verbleibende Teile (103) der Videoeingangsdaten (100) gemäß dem vorgegebenen Codierschema bei einer zweiten Einstellung der Codierung zu codieren, sowie
- eine Encoder-Kombinationseinheit (50), um den codierten einen oder mehrere interessierende Bereiche (102) und die codierten verbleibenden Teile (104) der Videoeingangsdaten in einen Encoder-Videoausgangsstrom (105) zu kombinieren,
**dadurch gekennzeichnet, dass** diese erste Codiereinheit (30) so eingerichtet ist, dass sie lediglich die Chrominanzkomponenten (101a) des einen oder mehrerer interessierender Bereiche (101) codiert.

2. Videocodiervorrichtung (10') nach Anspruch 1,
wobei die Auswahleinheit (20') umfasst:
- eine Arealauswahleinheit (21), um einen oder mehrere Hautareale in den Videoeingangsdaten (100) als einen oder mehrere interessierende Bereiche auszuwählen, wobei diese Videodaten eine Sequenz von Videoframes umfassen, wobei diese Frames in räumliche Blöcke unterteilt sind, sowie
- eine Blockauswahleinheit (24), um die räumlichen Blöcke (123) für das ausgewählte eine oder mehrere Areale zu ermitteln, wobei die ermittelten räumlichen Blöcke den einen oder mehrere interessierende Bereiche darstellen.

3. Videocodiervorrichtung (10') nach Anspruch 2,
wobei die Arealauswahleinheit (21) umfasst:
- eine Detektionseinheit (22), um einen Satz potentiell verwendbarer Areale (122), im Besonderen Hautareale, in den Videoeingangsdaten zu detektieren, die als interessierende Bereiche verwendet werden könnten, sowie
- eine Analyseeinheit (23), um diesen Satz detektierter, potentiell verwendbarer Areale (122) zu analysieren und ein oder mehrere Areale (123) als einen oder mehrere interessierende Bereiche aufgrund des einen oder mehrerer vorgegebener Auswahlkriterien auszuwählen.

4. Videocodiervorrichtung (10') nach Anspruch 3, wobei die Analyseeinheit (23) so eingerichtet ist, dass sie als Auswahlkriterien eine oder mehrere der folgenden einsetzt: räumliche Größe, temporale Stabilität, Illuminationsstabilität sowie Farbstabilität.

5. Videocodiervorrichtung (10') nach Anspruch 3,
wobei die Analyseeinheit (23) eine PPG-Exktraktionseinheit (25) umfasst, um ein PPG-Signal (180) aus den detektierten, potentiell verwendbaren Arealen zu extrahieren und ein oder mehrere Areale (123) als einen oder mehrere interessierende Bereiche aufgrund der Qualität und/oder des Inhalts der extrahierten PPG-Signale auszuwählen.

6. Videocodiervorrichtung (10') nach Anspruch 3,
wobei die PPG-Extraktionseinheit (25) so eingerichtet ist, dass sie einen oder mehrere Parameter der ersten Einstellungen für die Codierung zur Verwendung durch die erste Codiereinheit (30, 30') ermittelt, um den einen oder mehrere interessierende Bereiche aufgrund der extrahierten PPG-Signale zu codieren, und
wobei die erste Codiereinheit (30, 30') so eingerichtet ist, dass sie den einen oder mehrere Parameter der ersten Einstellung zur Codierung des einen oder mehrerer interessierender Bereiche verwendet.

7. Videocodiervorrichtung (10") nach Anspruch 1,
wobei die zweite Codiereinheit (40) so eingerichtet ist, dass sie die Luminanzkomponenten (101b) des einen oder mehrerer interessierender Bereiche (101) codiert und die Chrominanzkomponenten sowie die Luminanzkomponenten der verbleibenden Teile (103) der Videoeingangsdaten (100) codiert.

8. Videocodiervorrichtung (10, 10', 10") nach Anspruch 1,
wobei die zweite Codiereinheit (40, 40') so eingerichtet ist, dass sie verbleibende Teile (103) der Videoeingangsdaten (100) durch Inter-Block-Codierung oder Intra-Block-Codierung codiert.

9. Videocodiervorrichtung (10") nach Anspruch 1,
wobei die erste Codiereinheit (30) so eingerichtet ist, dass sie lediglich DC-Komponenten von Inter- oder Intra-Blöcken von zumindest den Chrominanzkomponenten (101a), vorzugsweise nur den Chrominanzkomponenten (101a), des einen oder mehrerer interessierender Bereiche (101) codiert.

10. Videocodierverfahren zur Codierung von Videoeingangsdaten, wobei das Videocodierverfahren die folgenden Schritte umfasst, wonach:
- in den Videoeingangsdaten (100) ein oder mehrere Hautareale als interessierende Bereiche (101) ausgewählt werden, die aufgrund eines oder mehrerer vorgegebener Auswahlkriterien, beinhaltend die räumliche Größe, temporale Stabilität, Illuminationsstabilität sowie Farbstabilität, oder aufgrund der Qualität und/oder des Inhalts von PPG-Signalen, die aus, potentiell als interessierende Bereiche verwendbaren Hautarealen extrahiert werden, zur Bereitstellung eines starken PPG-Signals verwendet werden können,
- der eine oder mehrere interessierende Bereiche (101) der Videoeingangsdaten (100) gemäß einem vorgegebenen Codierschema bei einer ersten Einstellung der Codierung zur Sicherung von PPG-relevanten Informationen in dem einen oder mehreren codierten, interessierenden Bereichen codiert werden, wobei lediglich die Chrominanzkomponenten (101a) des einen oder mehrerer interessierender Bereiche (101) codiert werden,
- verbleibende Teile (103) der Videoeingangsdaten (100) gemäß dem vorgegebenen Codierschema bei einer zweiten Einstellung der Codierung codiert werden, und
- der codierte eine oder mehrere interessierende Bereiche (102) und die codierten verbleibenden Teile (104) der Videoeingangsdaten in einen Encoder-Videoausgangsstrom (105) kombiniert werden.

11. Videodecodiervorrichtung (60, 60', 60") zur Decodierung eines codierten Videostroms, wobei der codierte Videostrom (160) codierte Videodaten umfasst, wobei ein oder mehrere Hautareale als interessierende Bereiche (101) von Videoeingangsdaten (100) aufgrund von einem oder mehreren vorgegebenen Auswahlkriterien, umfassend die räumliche Größe, temporale Stabilität, Illuminationsstabilität sowie Farbstabilität, oder aufgrund der Qualität und/oder des Inhalts von PPG-Signalen, die aus, potentiell als interessierende Bereiche verwendbaren Hautarealen extrahiert wurden, ausgewählt wurden und gemäß einem vorgegebenen Codierschema bei einer ersten Einstellung der Codierung zur Sicherung von PPG-relevanten Informationen in dem codierten einen oder mehreren interessierenden Bereichen (102) codiert wurden, wobei lediglich die Chrominanzkomponenten (101a) des einen oder mehrerer interessierender Bereiche (101) codiert wurden, und verbleibende Teile (103) der Videoeingangsdaten (100) gemäß dem vorgegebenen Codierschema bei einer zweiten Einstellung der Codierung codiert wurden, wobei die Videodecodiervorrichtung umfasst:
- eine erste Decodiereinheit (70), um den codierten einen oder mehrere interessierende Bereiche (161) gemäß einem zu dem zur Codierung des einen oder mehrerer interessierender Bereiche verwendeten Codierschema komplementären Decodierschema zu decodieren, sowie
- eine PPG-Extraktionseinheit (80, 80'), um ein PPG-Signal (164) aus dem einen oder mehreren decodierten, interessierenden Bereichen (163) zu extrahieren.

12. Videodecodiervorrichtung (60') nach Anspruch 11, weiterhin umfassend:
- eine zweite Decodiereinheit (75), um die codierten, verbleibenden Teile (162) der Videoeingangsdaten gemäß dem Decodierschema zu decodieren, sowie
- eine Decoder-Kombinationseinheit (95), um den decodierten einen oder mehrere interessierende Bereiche (163) und die decodierten, verbleibenden Teile (165) in einen Decoder-Videoausgangsstrom (166) zu kombinieren.

13. Videodecodierverfahren zur Decodierung eines codierten Videostroms, wobei der codierte Videostrom (160) codierte Videodaten umfasst, wobei ein oder mehrere Hautareale als interessierende Bereiche (101) von Videoeingangsdaten (100) aufgrund von einem oder mehreren vorgegebenen Auswahlkriterien, umfassend die räumliche Größe, temporale Stabilität, Illuminationsstabilität sowie Farbstabilität, oder aufgrund der Qualität oder des Inhalts von PPG-Signalen, die aus, potentiell als interessierende Bereiche verwendbaren Hautarealen extrahiert wurden, ausgewählt wurden und gemäß einem vorgegebenen Codierschema bei einer ersten Einstellung der Codierung zur Sicherung von PPG-relevanten Informationen in dem codierten einen oder mehreren interessierenden Bereichen (102) codiert wurden, wobei lediglich die Chrominanzkomponenten (101a) des einen oder mehrerer interessierender Bereiche (101) codiert wurden, und verbleibende Teile (103) der Videoeingangsdaten (100) gemäß dem vorgegebenen Codierschema bei einer zweiten Einstellung der Codierung codiert wurden, wobei das Videodecodierverfahren die folgenden Schritte umfasst, wonach:
- der codierte eine oder mehrere interessierende Bereiche (161) gemäß einem zu dem zur Codierung des einen oder mehrerer interessierender Bereiche verwendeten Codierschema komplementären Decodierschema decodiert werden, und
- ein PPG-Signal (164) aus dem einen oder mehreren decodierten, interessierenden Bereichen (163) extrahiert wird.

14. Videocodiersystem zur Codierung und Decodierung von Videodaten, umfassend:
- eine Videocodiervorrichtung (10, 10', 10") nach Anspruch 1 zur Codierung von Videoeingangsdaten, sowie
- eine Videodecodiervorrichtung (60, 60') nach Anspruch 11 zur Decodierung codierter Videodaten, die von der Videocodiervorrichtung codiert wurden.

15. Computerprogramm mit Programmcodemitteln, um einen Computer zu veranlassen, die Schritte des Verfahrens nach Anspruch 10 oder 13 auszuführen, wenn das Computerprogramm auf dem Computer abläuft.

## Revendications

1. Dispositif de codage vidéo (10, 10', 10", 10"') pour le codage de données vidéo d'entrée, le dispositif de codage vidéo comprenant :
- une unité de sélection (20, 20') pour sélectionner dans les données de vidéo d'entrée une ou plusieurs zones de peau comme régions d'intérêt (101), qui peuvent être utilisées pour fournir un signal PPG fort,
- une première unité de codage (30, 30', 30", 30'") pour le codage desdites une ou plusieurs régions d'intérêt (101) desdites données vidéo d'entrée (100) selon un système de codage prédéterminé avec un premier réglage du codage pour préserver des informations liées à PPG dans la ou les plusieurs régions d'intérêt codées,
- une seconde unité de codage (40, 40', 40") pour le codage de parties restantes (103) desdites données vidéo d'entrée (100) selon ledit système de codage prédéterminé avec un second réglage du codage, et
- une unité de combinaison de codeur (50) pour combiner les une ou plusieurs régions d'intérêt codées (102) et les parties restantes codées (104) desdites données vidéo d'entrée en un flot vidéo de sortie de codeur (105),
**caractérisé en ce que** ladite première unité de codage (30) est conçue pour le codage seulement des composantes de chrominance (101a) desdites une ou plusieurs régions d'intérêt (101).

2. Dispositif de codage vidéo (10') selon la revendication 1,
dans lequel ladite unité de sélection (20') comprend
- une unité de sélection de zone (21) pour sélectionner une ou plusieurs zones de peau dans les données vidéo d'entrée (100) comme une ou plusieurs régions d'intérêt, dans lequel lesdites données vidéo comprennent une séquence de trames vidéo, lesdites trames étant divisées en blocs spatiaux, et
- une unité de sélection de bloc (24) pour déterminer les blocs spatiaux (123) pour lesdites une ou plusieurs zones, lesquels blocs spatiaux déterminés représentent la ou les plusieurs régions d'intérêt.

3. Dispositif de codage vidéo (10') selon la revendication 2,
dans lequel ladite unité de sélection de zone (21) comprend
- une unité de détection (22) pour détecter un ensemble de zones potentiellement utilisables (122), en particulier des zones de peau, dans les données vidéo d'entrée qui pourraient être utilisées en tant que région d'intérêt, et
- une unité d'analyse (23) pour analyser ledit ensemble de zones potentiellement utilisables détectées (122) et sélectionner une ou plusieurs zones (123) comme une ou plusieurs régions d'intérêt sur la base desdits un ou plusieurs critères de sélection prédéterminés.

4. Dispositif de codage vidéo (10') selon la revendication 3, dans lequel ladite unité d'analyse (23) est conçue pour utiliser en tant que critères de sélection, une ou plusieurs de la taille spatiale, la stabilité temporelle, la stabilité d'éclairage et la stabilité de couleur.

5. Dispositif de codage vidéo (10') selon la revendication 3,
dans lequel ladite unité d'analyse (23) comprend une unité d'extraction de PPG (25) pour extraire un signal PPG (180) à partir desdites zones potentiellement utilisables détectées et pour sélectionner une ou plusieurs zones (123) comme une ou plusieurs régions d'intérêt sur la base de la qualité et/ou du contenu des signaux PPG extraits.

6. Dispositif de codage vidéo (10') selon la revendication 3,
dans lequel ladite unité d'extraction de PPG (25) est conçue pour déterminer un ou plusieurs paramètres des premiers réglages pour le codage à utiliser par la première unité de codage (30, 30') pour le codage desdites une ou plusieurs régions d'intérêt sur la base des signaux PPG extraits, et
dans lequel ladite première unité de codage (30, 30') est conçue pour utiliser lesdits un ou plusieurs paramètres du premier réglage pour le codage desdites une ou plusieurs régions d'intérêt.

7. Dispositif de codage vidéo (10") selon la revendication 1,
dans lequel ladite seconde unité de codage (40) est conçue pour le codage des composantes de luminance (101b) desdites une ou plusieurs régions d'intérêt (101) et pour le codage des composantes de chrominance et des composantes de luminance des parties restantes (103) desdites données vidéo d'entrée (100).

8. Dispositif de codage vidéo (10, 10', 10") selon la revendication 1,
dans lequel ladite seconde unité de codage (40, 40') est conçue pour le codage des parties restantes (103) desdites données vidéo d'entrée (100) par codage inter-bloc ou codage intra-bloc.

9. Dispositif de codage vidéo (10") selon la revendication 1,
dans lequel ladite première unité de codage (30) est conçue pour le codage seulement de composantes CC d'inter- ou d'intra-blocs d'au moins les composantes de chrominance (101a), en particulier seulement les composantes de chrominance (101a), desdites une ou plusieurs régions d'intérêt (101).

10. Procédé de codage vidéo pour le codage de données vidéo d'entrée, le procédé de codage vidéo comprenant les étapes de :
- sélection dans des données vidéo d'entrée (100) d'une ou plusieurs zones de peau comme régions d'intérêt (101), qui peuvent être utilisées pour fournir un signal PPG fort, sur la base d'un ou plusieurs critères de sélection prédéterminés incluant la taille spatiale, la stabilité temporelle, la stabilité d'éclairage et la stabilité de couleur ou sur la base de la qualité et/ou du contenu de signaux PPG extraits à partir de zones de peau potentiellement utilisables en tant que région d'intérêt,
- codage desdites une ou plusieurs régions d'intérêt (101) desdites données vidéo d'entrée (100) selon un système de codage prédéterminé avec un premier réglage du codage pour préserver des informations liées à PPG dans les une ou plusieurs régions d'intérêt codées, dans lequel seulement les composantes de chrominance (101a) desdites une ou plusieurs régions d'intérêt (101) sont codées,
- codage de parties restantes (103) desdites données vidéo d'entrée (100) selon ledit système de codage prédéterminé avec un second réglage du codage, et
- combinaison des une ou plusieurs régions d'intérêt codées (102) et des parties restantes codées (104) desdites données vidéo d'entrée dans un flot vidéo de sortie de codeur (105).

11. Dispositif de décodage vidéo (60, 60', 60") pour décoder un flot vidéo codé, ledit flot vidéo codé (160) comprenant des données vidéo codées, dans lequel une ou plusieurs zones de peau en tant que régions d'intérêt (101) de données vidéo d'entrée (100) ont été sélectionnées sur la base d'un ou plusieurs critères de sélection prédéterminés incluant la taille spatiale, la stabilité temporelle, la stabilité d'éclairage et la stabilité de couleur ou sur la base de la qualité et/ou du contenu de signaux PPG extraits à partir de zones de peau potentiellement utilisables en tant que région d'intérêt, et qui ont été codées selon un système de codage prédéterminé avec un premier réglage du codage pour préserver des informations liées à PPG dans les une ou plusieurs régions d'intérêt codées (102), dans lequel seulement les composantes de chrominance (101a) desdites une ou plusieurs régions d'intérêt (101) ont été codées, et des parties restantes (103) desdites données vidéo d'entrée (100) ont été codées selon ledit système de codage prédéterminé avec un second réglage du codage, ledit dispositif de décodage vidéo comprenant :
- une première unité de décodage (70) pour décoder les une ou plusieurs régions d'intérêt codées (161) selon un système de décodage complémentaire au système de codage qui a été utilisé pour le codage desdites une ou plusieurs régions d'intérêt, et
- une unité d'extraction de PPG (80, 80') pour extraire un signal PPG (164) à partir desdites une ou plusieurs régions d'intérêt décodées (163).

12. Dispositif de décodage vidéo (60') selon la revendication 11, comprenant en outre
- une seconde unité de décodage (75) pour décoder les parties restantes codées (162) desdites données vidéo d'entrée selon ledit système de décodage, et
- une unité de combinaison de décodeur (95) pour combiner les une ou plusieurs régions d'intérêt décodées (163) et les parties restantes décodées (165) dans un flot vidéo de sortie de décodeur (166).

13. Procédé de décodage vidéo pour décoder un flot vidéo codé, ledit flot vidéo codé (160) comprenant des données vidéo codées, dans lequel une ou plusieurs zones de peau en tant que régions d'intérêt (101) de données vidéo d'entrée (100) ont été sélectionnées sur la base d'un ou plusieurs critères de sélection prédéterminés incluant la taille spatiale, la stabilité temporelle, la stabilité d'éclairage et la stabilité de couleur ou sur la base de la qualité ou du contenu de signaux PPG extraits à partir de zones de peau potentiellement utilisables en tant que région d'intérêt, et ont été codées selon un système de codage prédéterminé avec un premier réglage du codage pour préserver des informations liées à PPG dans les une ou plusieurs régions d'intérêt codées (102), dans lequel seulement les composantes de chrominance (101a) desdites une ou plusieurs régions d'intérêt (101) ont été codées, et des parties restantes (103) desdites données vidéo d'entrée (100) ont été codées selon ledit système de codage prédéterminé avec un second réglage du codage, ledit procédé de décodage vidéo comprenant les étapes de :
- décodage des une ou plusieurs régions d'intérêt codées (161) selon un système de décodage complémentaire au système de codage qui a été utilisé pour le codage desdites une ou plusieurs régions d'intérêt, et
- extraction d'un signal PPG (164) à partir desdites une ou plusieurs régions d'intérêt décodées (163).

14. Système de codage vidéo pour le codage et le décodage de données vidéo, comprenant :
un dispositif de codage vidéo (10, 10', 10") selon la revendication 1 pour le codage de données vidéo d'entrée, et
un dispositif de décodage vidéo (60, 60') selon la revendication 11 pour le décodage de données vidéo codées, codées par ledit dispositif de codage vidéo.

15. Programme informatique comprenant moyen formant code de programme pour amener un ordinateur à effectuer les étapes du procédé selon la revendication 10 ou 13 lorsque ledit programme informatique est exécuté sur l'ordinateur.
